# EUROPEAN PATENT APPLICATION

(11) **EP 3 016 381 A1**
(43) Date of publication of application: **04.05.2016**
(21) Application number: 14306754.4
(22) Date of filing: 31.10.2014
(51) Int. Cl.: H04N 7/14

(54) **Video conferencing system**

(71) Applicant: Thomson Licensing, 92130 Issy-les-Moulineaux (FR)
(72) Inventor: Schubert, Arno, 35576 Cesson Sévigné (FR); Blonde, Laurent, 35576 Cesson-Sévigné (FR); Drazic, Valter, 35576 Cesson-Sévigné (FR)
(74) Representative: Browaeys, Jean-Philippe

(57) **Abstract**

The invention relates to a video conferencing system (10) comprising: a camera assembly (100) for capturing images of at least one local participant (P1-P4) through a field of view defined by a range of angles; a communication module (860) for receiving images from and transmitting images to a remote video conferencing system; a screen (200) for displaying images of one or more remote participants captured by the remote video conferencing system, the screen being disposed between the camera and the at least one local participant, wherein, the camera assembly is configured to capture images of the local participants through the screen; and the screen is switchable between a capture mode in which the screen is transparent to light, enabling light rays to reach the camera and a display mode in which images of remote participants are displayed on the screen to the local participants.

## Description

### TECHNICAL FIELD

The present invention relates to a video conferencing system, and a method for performing a video conference.

### BACKGROUND

Video conferencing systems enable interaction, by means of a data communication network, between participants located remotely with respect to one another. Locally captured audio and video data streams, are transmitted over a data communication network, such as the Internet, to a remote display system. Typically, a camera located locally with respect to a first group of participants captures images of the first group of participants for transmission to a remotely located display system for viewing by a remotely located second group of participants. Images of the second group of participants are in turn captured by a camera locally located with respect to the second group of participants, for transmission to a display system local to the first group of participants. Audio data synchronized with the video data is also captured locally and transmitted to the remotely located display system.

Many existing video conferencing systems use limited perspective video cameras which provide a narrow field of view. While such systems are suitable for one to one video conferences, they are less suitable for a video conferencing having several participants locally, and/or remotely. Moreover, the line of sight of a camera capturing images of a participant is typically set at a different angle from the participant to that of the display system viewed by the participant to see the remote participants. Consequently, the displayed image of a participant does not show the participant looking directly at the camera and as a result there is no perception of there being eye contact between the participant(s) in the captured image and the participant(s) viewing the captured image.

The present invention has been devised with the foregoing in mind.

### SUMMARY

According to a first aspect of the invention there is provided a video conferencing system comprising: a camera assembly for capturing images of at least one local participant within a field of view defined by a range of angles; a communication module for receiving images from and transmitting images to a remote video conferencing system; a screen for displaying images of one or more remote participants captured by the remote video conferencing system, the screen being disposed between the camera and the at least one local participant, wherein, the camera assembly is configured to capture images of the local participants through the screen; and the screen is switchable between an image capture mode in which the screen is transparent to light, enabling images of the at least one local participant to be captured through the screen and a display mode in which images of the one or more remote participants are displayed on the screen to the at least one local participant.

In an embodiment, the camera assembly is configured to capture images within a range of angles of 360°

In an embodiment, the camera assembly comprises a camera and a reflector for directing light passing through the screen to the camera.

In an embodiment, the camera assembly comprises a plurality of camera devices arranged around a 360° angle range.

In an embodiment, the screen is synchronized with the camera assembly to sequentially switch between the image capture mode and the display mode

In an embodiment, the screen comprises an OLED display including a plurality of OLEDs, the OLEDs being enabled in the display mode, according to the image to be displayed and being disabled in the image capture mode to provide transparency.

In an embodiment provided with at least one illumination unit for illuminating the screen during the display mode, the at least one lighting unit being synchronized with the screen to sequentially switch between the image capture mode in which the illumination unit is inactivated and the display mode in which the illumination unit is activated.

In an embodiment, the screen comprises an LCD display.

In an embodiment, the screen is provided with a switchable absorbent, switchable between a light absorptive mode in display mode and a transparent mode in image capture mode.

In an embodiment, the screen further comprises a diffuser layer switchable between a transparent mode in which the diffuser layer is transparent to visible light, and a diffuse mode in which the diffuser layer diffuses transparent light.

In an embodiment the system comprises a field of view selector for selecting a partial field of view within the full field of view, for viewing.

In an embodiment, the camera assembly comprises a depth sensor for acquisition of a depth map.

In an embodiment, data from the depth sensor is used for gesture recognition to control the video conferencing system.

In an embodiment, the screen comprises a cylindrical surface arranged to surround the camera assembly.

In an embodiment, the screen comprises a plurality of flat surfaces arranged to surround the camera assembly.

In an embodiment, the system is provided with an image projection assembly for projecting a remotely acquired image on the screen.

In an embodiment, the image projection assembly comprises at a projector and a mirror for directing images from the image projector onto the screen.

Another aspect of the invention provides a method of performing a video conference between a first group of participants and a second group of participants, located remotely to the first group of participants wherein at least one of the groups of participants is provided with a video conferencing system according to any embodiment of the first aspect of the invention, the method comprising capturing images, of at least one local participant of the first group of participants within a field of view defined by a range of angles, the images being captured through a display disposed between a camera capturing the images and the at least one participant; transmitting the captured images to a remote video conferencing system; receiving images transmitted from the remote video conferencing system, the received images corresponding to captured images of the remote group of participants; displaying the received images on the display; and switching the display between an image capture mode in which the screen is transparent to light, enabling images of the at least one local participant to be captured through the screen and a display mode in which images of the one or more remote participants are displayed on the screen to the at least one local participant.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
FIG. 1 is a schematic diagram of a video conferencing system according to a first embodiment of the invention;
FIG. 2 is a schematic diagram of an example of the camera assembly of Figure 1;
FIG. 3 is a schematic diagram of part of the screen of Figure 1;
FIG. 4 is a schematic diagram of a screen in accordance with another embodiment of the invention;
FIG. 5 is a schematic diagram of a video conferencing system according to another embodiment of the invention;
FIG. 6 is a schematic diagram of a screen in accordance with another embodiment of the invention;
FIG. 7 is a schematic diagram of an example of a camera assembly according to another embodiment of the invention;
FIG. 8 is a block functional diagram of a control device in accordance with an embodiment of the invention;
FIG. 9 is a schematic diagram of a local video conferencing system and a remote video conferencing system in accordance with embodiments of the invention;
FIG. 10 is a flow chart illustrating steps of a method for performing a video conference in accordance with one or more embodiments of the invention; and
FIG. 11A-C are schematic diagrams of the configuration of a video conferencing system and examples of displayed images of participants in accordance with embodiments of the invention.

### DETAILED DESCRIPTION

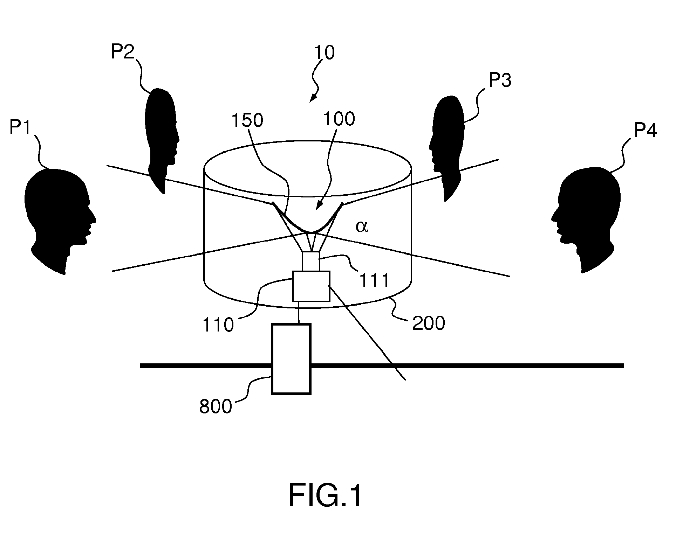

Figure 1 is a schematic diagram of a video conferencing system according to a first embodiment of the invention.

The video conferencing system 10, comprises a camera assembly 100, and a curved display screen 200, disposed between the camera assembly 100 and participants P1, P2, P3 and P4 of the video conference. Participants P1 to P4 are arranged in a circle around the curved display screen 200. A control unit 800 is provided for controlling camera acquisition and display states of the display screen 200.

The camera assembly 100 comprises a camera device 110 for capturing image data and a mirror assembly 150 arranged to direct light passing through the display screen 200 from the participant's side towards the camera device 110.

The camera device 110 is provided with a main lens 111 and may be any suitable video camera such as for example the FLEA3 from PontGrey or any other camera delivering an RGB video signal and any ominidirectional camera provided with one or more mirrors such as for example the Polycom CX5100, the camera system described in US 7952606, US 20020006000, or US2013194382A.

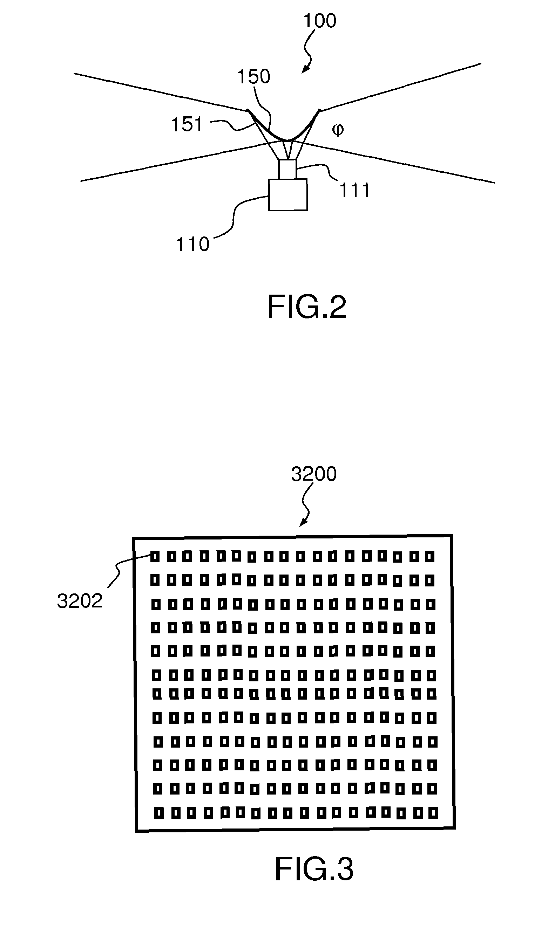

Figure 2 is a schematic diagram of an example of the camera assembly 100 of Figure 1. As illustrated in Figure 2, mirror assembly 150 comprises a convex shaped reflecting element 151 in the general shape of a parabolic cone, arranged to capture light from a horizontal field of view of 360° and direct it towards the main lens 111 of the camera device 110. An example of such a mirror assembly is described in US6459451. The configuration of the mirror assembly 150 and the camera device 110 enables the camera assembly to capture a 360° panoramic image. The vertical field of view ϕ from which light is captured depends on the shape of the reflecting element 151 and the main lens 111.

Display screen 200 is curved, forming a cylindrical shaped shell arranged around the camera assembly 100. The display screen 200 is configured to operate in two modes: a transparent mode in which light rays can pass through the screen from the exterior of the screen to the interior of the screen to reach the camera assembly 100, and a display mode in which images can be displayed on the screen for viewing by participants P1 to P4 located at the exterior of the screen. For example, in one embodiment of the invention as illustrated in Figure 3 the display screen may comprise an OLED (organic light emitting diode) screen 3200 provided with a plurality of OLEDs 3202. An OLED display may typically have a transparency of over 85% when the OLEDs are switched off. The narrow gap between the pixels 3202 of the screen and the transparent components (substrate, cathode and anode) allow OLED screens to be transparent in a non-display mode. In image capture mode, images of the participants are captured through the transparent OLED display and in display mode remotely captured images are displayed on the OLED display. For the display mode the OLEDs 3202 are enabled to emit light to generate an image, acquired remotely of the remote participant(s) of the video conference. The OLEDs 3202 when emitting light, illuminate a pixel area of the screen 3200 to generate the image for display. In the transparent mode for image capture the OLEDs 3202 are switched off enabling light to pass through the OLED display 3200 from the participants to the camera assembly 100 thereby enabling the camera device 110 to acquire an image of the participants P1 to P4.

In another embodiment of the invention the display screen may comprise an OLED (organic light emitting diode) screen provided with a switchable light absorbent in order to increase the contrast of the observed image on the screen in the display mode. The absorbent is in a non-absorbent mode for image capturing when the OLED screen operates in a transparent mode and is switched to an absorbent mode when the display screen operates in a display mode to display remotely captured images.

In the image capturing mode the transparent state of the absorbent allows light that passes through the OLED screen to pass through the absorbent. In the display mode the absorbent state restricts the light passing through the OLED screen from passing through the absorbent to the participants. It also restricts interfering reflections from ambient light sources.

In some embodiments of the invention the display screen may comprise an LCD (liquid crystal display) screen provided with one or more light sources for providing illumination in display mode.

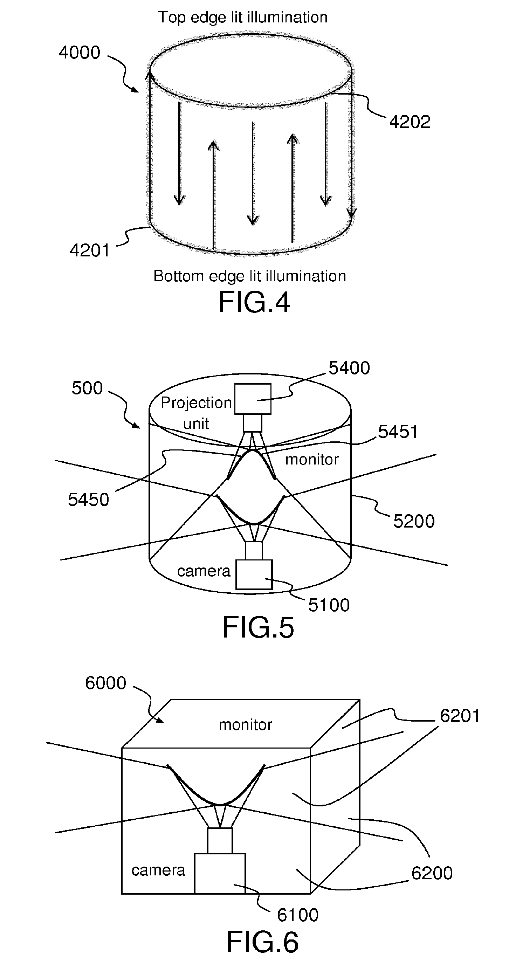

The light source may be any suitable visible light source that functions as a display backlight, for example. An illumination unit such as for example an LED edge illuminator, used to provide the illumination for the display mode of the display screen 4200 may be disposed at the top 4202 and/or the bottom of the display. Figure 4 schematically illustrates a curved display screen 4200 according to an embodiment of the invention. The display screen 4200 is provided with a top illuminator 4201 for illuminating the display screen 4200 from the top of the screen and a bottom illuminator 4202 for illuminating the display screen 4200 from the bottom of the screen. The illuminators 4201 and 4202 are controlled by the control unit in synchronization with the display and acquisition mode so that in display mode the display screen is illuminated 4200 and in image capture mode the display screen 4200 is not illuminated.

Figure 5 schematically illustrates a video conferencing system 500 according to another embodiment of the invention. The video conferencing system 500 comprises one or more projectors 5400 and associated mirror assemblies 5450 to project the remote image onto the display device 5200. The projectors may include projection technology such as LCD, DLP or LCOS. The remote image is projected onto the surface of a reflecting element 5451 of the mirror assembly 5450 and reflected onto the display screen 5200. The display screen 5200 may comprise a material capable of switching from a transparent mode for camera acquisition to an opaque mode for display of the projected image. For example the display material may comprise a switchable diffuser such as Polymer disperse liquid crystal (PDLC) operable by electronic control to switch from a transparent mode enabling visible light to pass through the screen to a diffuse mode in which visible light is diffused rendering the screen non-transparent mode suitable for display of the remotely acquired images.

In the described embodiments switching between the display mode and the image capture mode is performed sequentially according to a time sequence managed by the controller 800.

While in the illustrated embodiments the display screen is a cylindrical shaped shell, it will be appreciated that the invention is not limited to a cylindrical shape but may take any other shape around which the participants may be positioned. For example the display screen may be formed of a plurality of flat surfaces, forming for example a rectangular shape or a pyramidal shape. Figure 6 schematically illustrates a video conferencing system 6000 according to another embodiment of the invention in which the screen 6200 is composed of flat surfaces 6201 forming a cubic shaped shell.

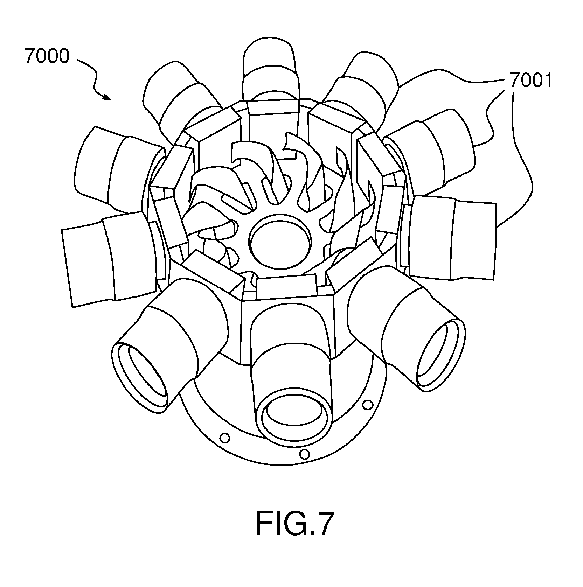

Figure 7 illustrates a camera assembly 7100 according to a further embodiment of the invention. The camera assembly 7100 comprises a plurality of camera devices 7101 arranged around a 360° field angle to provide a 360° horizontal field of view. While the example depicts 10 cameras arranged around a 360° it will be appreciated that in other embodiments of the invention any number of cameras may be included to provide full or part coverage of a 360° horizontal field of view.

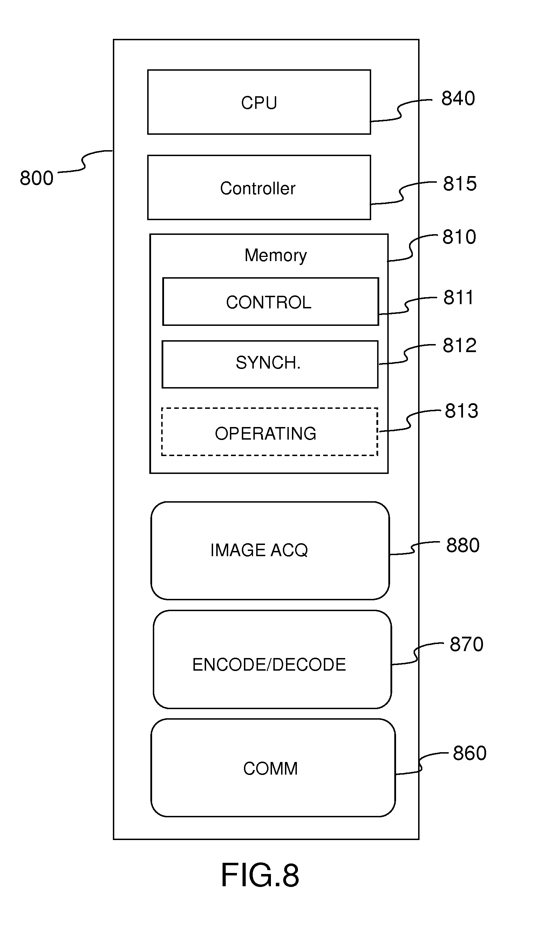

Figure 8 is a block diagram schematically illustrating functional components of a control device 800 configured to control switching of the display screen between an image display mode and an image acquisition mode in accordance with an embodiment of the present invention.

The control device 800 includes comprises memory 810, a memory controller 815 and processing circuitry 840 comprising one or more processing units (CPU(s)). The one or more processing units 840 run various software programs and/or sets of instructions stored in the memory 810 to perform various functions of the control device 800.

Software components stored in the memory include a control module (or set of instructions) 811 for controlling switching the display screen from a display mode to and an image capture mode and a synchronization module 812 for synchronization of the switching. Other modules may be included such as an operating system module 813 for controlling general system tasks (e.g. power management, memory management) and for facilitating communication between the various hardware and software components of the control device 800. The control device is provided with an image acquisition module 880 for acquiring images from the camera assembly 100, an encoder/decoder for encoding images for transmitting and for decoding received images and a communication module 860 for transmission of locally acquired images and audio data and for reception of remotely acquired images and audio data.

When executed instructions cause control module 811 to generate and provide control signals to the display screen and to camera assembly to control the display and image capture modes. In image capture mode the display screen is switched to transparent mode and the camera assembly is switched to acquisition mode. In the display mode the display screen is switched to a non-transparent mode and images acquired remotely are retrieved via the communication module 860 for display on the display screen. Images acquired locally by camera assembly or received remotely via communication module 860 may be stored in memory of the control device 800. In some embodiments of the invention images acquired locally may be displayed locally so that local participants can visualize the images viewed remotely.

The components of the control device 800 communicate over the one or more communication buses. Memory 810 may include high speed random access memory (RAM) and read only memory (ROM). ROM stores at least program code and parameters. Algorithms of the methods according to embodiments of the invention may be stored in ROM. When switched on, the CPU uploads the program to the RAM and executes the corresponding instructions.

Memory 810 may include non-volatile memory, such as one or more magnetic disk storage devices, flash memory devices or other non-volatile solid state memory devices. In some embodiments, the memory may further include storage remotely located from the one or more CPUs 840. For example, storage means accessible via an interface and/or a communication network.

In some embodiments, the control device 800 is provided with a display for example a touch sensitive screen, for displaying data and/or serving as a graphical interface with a user, by means of a keyboard or any other user interactive means. In some embodiments the device is provided with a power source such as a battery. According to alternative embodiments, the power source may be external to the device.

In this embodiment, the control device 800 is a programmable apparatus which uses software to implement embodiments of the invention. However, alternatively, the processing device may be implemented in hardware (for example, in the form of an Application Specific Integrated Circuit or ASIC), or in a combination of hardware and software.

In Figure 8, the illustrated modules correspond to functional modules, which may or may not correspond to distinguishable physical units. For example, a plurality of such modules may be associated in a unique component or circuit, or correspond to software functionalities. For example the control module and the synchronization module may be the same module or component. Moreover, a module may potentially be composed of separate physical entities or software functionalities.

A functional module may be implemented as a hardware circuit comprising for example VLSI circuits or gate arrays, discrete semiconductor conductors such as logic chips, transistors etc. A module may also be implemented in a programmable hardware device such as field programmable gate arrays, programmable array logic, programmable logic devices or the like. Moreover, modules may also be implemented as a combination of software and one or more hardware devices. For example a module may be embodied in the combination of a processor that operates a set of operational data. Moreover, a module may be implemented in the combination of an electronic signal communicate via transmission circuitry.

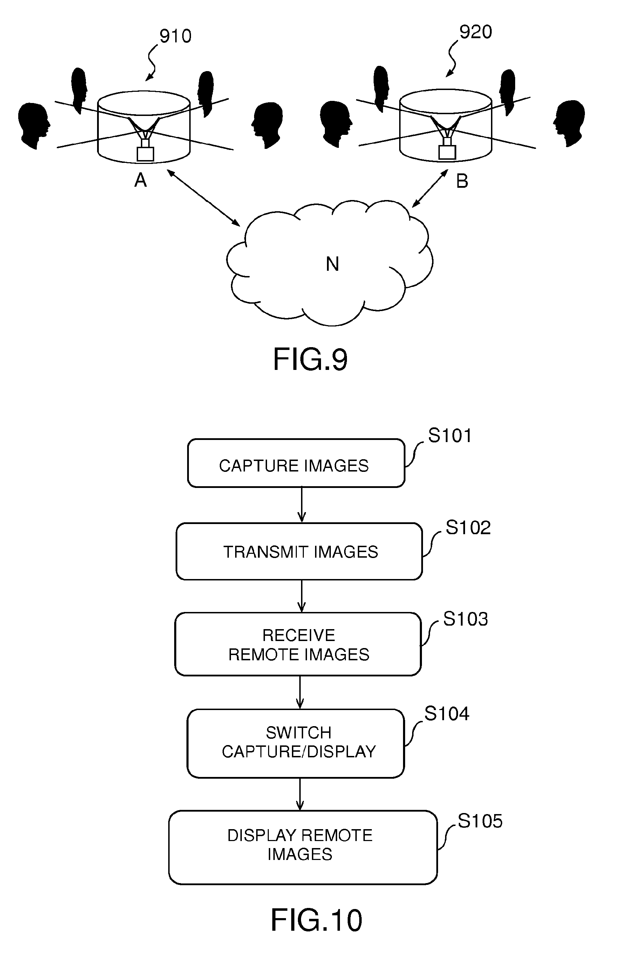

Figure 9 illustrates a video conferencing system in accordance with embodiments of the invention in which a first video conferencing unit 910 is located at position A and a second video conferencing unit 920 in communication with video conferencing unit 910 is located remotely to A at position B.

First video conferencing unit 910 is located locally to a first group of participants and captures images of the first group of participants, through the screen of the first video conferencing unit 910 when the screen is in acquisition mode. Data representative of the captured images are transmitted from the first video conferencing unit 910 via data communication network N to the second video conferencing unit 920. At the second video conferencing unit 920 the images received from the first video conferencing unit 910 are displayed on the screen of the second video conferencing unit when the screen is in display mode. Images of the second group of participants are in turn captured by a camera of the second video conferencing unit 920, when the screen is in acquisition mode for transmission to the first video conferencing unit 910 for display on the screen on the first video conferencing unit 910.

Figure 10 is a flow chart illustrating steps of a method for performing a video conference between local participants and remote participants in accordance with one or more embodiments of the invention. In step S101 a video conferencing system according to an embodiment of the invention captures images of at least one local participant through the display screen. The captured images and associated audio data are then transmitted in step S102 to a remote video conferencing system used by the remote participants. In step S103 images captured by the remote conferencing system of the remote participants are received by the local conferencing system. The mode of the display screen is switched from capture mode to display mode and the received images of the remote participants are displayed on the display screen. The display screen is then switched to an image capture mode to capture images of the one or more participants through the display. It will be appreciated that the displayed order

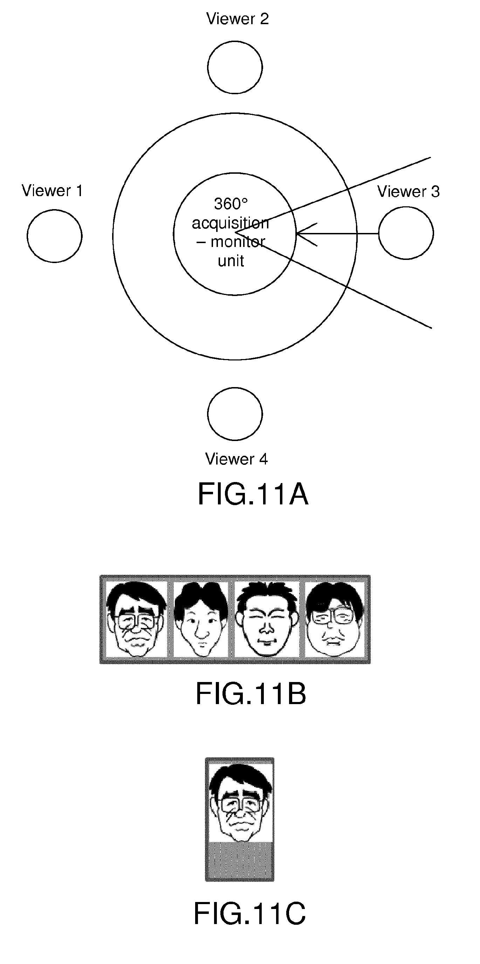

Views for display may also be restricted by selecting a displayable viewing angle of the remote participants as illustrated in FIG. 11A. In some embodiments of the invention the viewer(s) may select to view images of all the remote participants together on the display screen as illustrated in FIG. 11B or select one or more particular participants of the remote participants for viewing, as illustrated in FIG. 11C. Each viewer may observe an unwarped and reframed panoramic view in his angle of view of the screen, or on a flat panel of the screen positioned opposed to the viewer. A remote participant to be viewed may be selected by the local viewing participants by means of a user interface of the video conferencing unit or automatically for example by voice recognition, voice direction detection or gesture recognition.

In some embodiments of the invention the camera assembly may further comprise a depth sensor for acquiring a depth map of the scene of participants. The acquired depth may be used, for example, for gesture recognition, for example to control the video conferencing unit to select the participant to be viewed. The depth sensor may be provided with a concave lens to enable the depth map to be acquired of the panoramic scene of participants by the depth sensor.

Since in embodiments of the invention a local participant views the images of a remote participant on the same screen though which images of the local participant are captured, the eye gaze of the local participant is orientated in the same direction for both local image capture and remote image viewing giving the perception of maintained eye contact with the remote participant viewing the local participant on his remote screen.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been described with respect to a video conferencing system in which two video conferencing units are used it will be appreciated that the invention may be applied to a video conferencing system having three or more video conferencing units in communication via a data communication network.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A video conferencing system comprising:
a camera assembly for capturing images of at least one local participant within a field of view defined by a range of angles;
a communication module for receiving images from and transmitting images to a remote video conferencing system;
a screen for displaying images of one or more remote participants captured by the remote video conferencing system, the screen being disposed between the camera and the at least one local participant, wherein:
the camera assembly is configured to capture images of the local participants through the screen; and
the screen is switchable between an image capture mode in which images of the at least one local participant are captured through the screen and a display mode in which images of the one or more remote participants are displayed on the screen to the at least one local participant.

2. A video conferencing system according to claim 1, wherein the camera assembly is configured to capture images within a field of view of 360°

3. A video conferencing system according to claim 1 or 2, wherein the camera assembly comprises a camera and a reflector for directing light passing through the screen to the camera

4. A video conferencing system according to claim 2, wherein the camera assembly comprises a plurality of camera devices arranged around a 360° angle range.

5. A video conferencing system according to any preceding claim, wherein the screen is synchronized with the camera assembly to sequentially switch between the image capture mode and the display mode.

6. A video conferencing system according to claim 5, wherein the screen comprises an OLED display including a plurality of OLEDs, the OLEDs being enabled in the display mode, according to the image to be displayed, and being disabled in the image capture mode to provide transparency.

7. A video conferencing system according to any preceding claim, comprising at least one illumination unit for illuminating the screen during the display mode, the at least one lighting unit being synchronized with the screen to sequentially switch between the image capture mode in which the illumination unit is inactivated and the display mode in which the illumination unit is activated.

8. A video conferencing system according to claim 7, wherein the screen comprises an LCD display.

9. A video conferencing system according to any preceding claim, wherein the screen is provided with a switchable absorbent, switchable between a light absorptive mode in display mode and a light transparent mode in image capture mode.

10. A video conferencing system according to any preceding claim, wherein the screen further comprises a diffuser layer switchable between a transparent mode in which the diffuser layer is transparent to visible light, and a diffuse mode in which the diffuser layer diffuses visible light.

11. A video conferencing system according to any preceding claim further comprising a field of view for selector for selecting a partial field of view within the full field of view, for viewing.

12. A video conferencing system according to any preceding claim, wherein the camera assembly comprises a depth sensor for acquisition of a depth map.

13. A video conferencing system according to claim 12, wherein data from the depth sensor is used for gesture recognition to control the video conferencing system.

14. A video conferencing system according to any preceding claim comprising an image projection assembly for projecting a remotely acquired image on the screen.

15. A video conferencing system according to claim 16, wherein the image projection assembly comprises at a projector and a mirror for directing images from the image projector onto the screen.

16. A method of performing a video conference between a first group of participants and a second group of participants located remotely to the first group of participants, the method comprising:
capturing images, of at least one local participant of the first group of participants within a field of view, the images being captured through a display disposed between a camera capturing the images and the at least one participant;
transmitting the captured images to a remote video conferencing system;
receiving images transmitted from the remote video conferencing system, the received images corresponding to captured images of the remote group of participants;
displaying the received images on the display,
switching the display between an image capture mode in which images of the at least one local participant are captured through the screen and a display mode in which images of the one or more remote participants are displayed on the screen to the at least one local participant.
